# EUROPEAN PATENT APPLICATION

(11) **EP 3 185 545 A1**
(43) Date of publication of application: **28.06.2017**
(21) Application number: 14881939.4
(22) Date of filing: 19.12.2014
(51) Int. Cl.: H04N 7/15

(54) **VIDEO CONFERENCE CONTROL METHOD AND SYSTEM**

(30) Priority: 20.08.2014 CN 201410414572
(71) Applicant: ZTE Corporation, Shenzhen City, Guangdong Province 518057 (CN)
(72) Inventor: YU, Quanfu, Shenzhen Guangdong 518057 (CN); SHI, Tinggan, Shenzhen Guangdong 518057 (CN); DING, Peng, Shenzhen Guangdong 518057 (CN)
(74) Representative: Regimbeau
(86) International application number: PCT/CN2014/094436
(87) International publication number: WO 2015/117513

(57) **Abstract**

Disclosed are a video conference control method, apparatus and system relating to the field of mobile applications, which solve the problem that relevant conference TV control manners cannot meet application demands. The method includes: a portable device establishes connection with a video conference terminal through wireless communication; and the portable device carries out data interaction with the video conference terminal through the connection. The technical solution is suitable for video conferences and realizes access of the portable device to the video conferences and control for the video conferences.

## Description

### TECHNICAL FIELD

The present invention relates to the field of video conference controlling technologies, and in particular, to a video conference control method and system, so as to realize interaction with a conference terminal during a conference by a wireless communication technology.

### BACKGROUND

With the progress of society and the development of science and technology, concept of people for the product is greatly changed, and from the original satisfaction for functional demands to the present creation for user experience era, the requirements of people for products are higher and higher. Whether a product is good or not mostly depends on user experience from intuitive factors, for example, whether the product is simply and easily used, whether operations are convenient or not, whether an interface is nice, whether functions meet usage scenarios, etc., are included in the scope of the user experience.

For users, a manner of using a product is that desired functions are realized by controlling operations of the product in some manner. The most common situation is that the operations are realized by a remote controller, and most of traditional conference TVs are still operated by an IR (Infrared Radiation) remote controller. The remote controller is designed to have a plurality of keys, and dozens of keys are designed on one panel in order to support a function of character input, a service-related function, a function of shortcut keys and the like, therefore, the operations are inconvenient.

With the development of the conference TVs, the remote controller is difficult to achieve good user experience in the operations of many emerging functional services, and the problems of inconvenient operations, difficult character input and the like are denounced by people. For example, character editing is needed when a short message is sent to an opposite terminal, number keys and direction keys of the remote controller need to be operated back and forth to choose characters, the usability of an input method is poor, and the character input is very complicated.

Additionally, direct operations of emerging service demands, including message sending, file sharing, peripheral device access and the like on a screen are inappropriate or unsatisfactory. For example, in a conference place, when a conference administrator or a conference presider sends a notification or a message to an administrator of the opposite terminal or some conference member, direct display of the notification or the message on the screen is apparently inappropriate if the message is private, and reading the message by operating the remote controller during the conference may affect the proceeding of the conference.

Although other control manners, such as Web on-line control, control software installed on a PC (Personal Computer) and the like, can be selected at present, the manners need to be realized by the PC, while as the PC has poor portability due to the factors of volume, weight and the like, and one PC needs to be equipped for each conference place in a practical application, the cost of the conference place is increased, and the user experience is not high.

For the above problems, especially the emerging service demands cannot be met by a control manner of the traditional remote controller in some application scenarios of the conference TVs, and an effective solution has not appeared so far.

### SUMMARY

The present invention provides a video conference control method and system, and solves the problem that relevant conference TV control manners cannot meet application demands.

In order to solve the above technical problem, the technical solution below is adopted.

The video conference control method includes:
establishing connection, by a portable device, with a video conference terminal through wireless communication; and
carrying out data interaction, by the portable device, with the video conference terminal through the connection.

Optionally, the wireless communication includes WLAN (Wireless Local Area Network) and/or Bluetooth, and a data transmission manner of the wireless communication is TCP (Transmission Control Protocol) or UDP (User Datagram Protocol).

Optionally, before establishing the connection with the video conference terminal by the portable device through the wireless communication, the method further includes:
requesting, by the portable device, client downloading from the video conference terminal; and
issuing, by the video conference terminal, the client to the portable device.

Optionally, the step of carrying out the data interaction with the video conference terminal by the portable device through the wireless communication includes:
acquiring, by the portable device, a terminal list from the video conference terminal, wherein the terminal list contains information of other video conference terminals accessed to the video conference terminal;
sending, by the portable device, a service request to the video conference terminal, wherein the service request carries service types and terminal information for requesting the service, and the service request is a VCTProto request protocol; and
receiving, by the video conference terminal, the service request, and executing a service operation corresponding to the service request and then returning a request result to the portable device.

Optionally, the service types include any one or more of information below:
auxiliary video access service, camera access service, microphone access service, file sharing service, real-time character service and real-time multimedia service.

Optionally, the step of receiving, by the video conference terminal, the service request, and returning the request result to the portable device includes:
checking, by the video conference terminal, whether the service request sent by the portable device is authorized or not;
starting a service corresponding to the service request and returning a request result indicating that the request is successful to the portable device when the service request is authorized; and
returning a request result indicating that the request fails to the portable device when the service request is unauthorized.

Optionally, the step of starting the service corresponding to the service request when the service request is authorized includes:
accepting a picture or camera input of the portable device as auxiliary video source access of the video conference terminal with regard to the auxiliary video access service;
virtualizing a camera of the portable device into a local video input of the video conference terminal and accepting the camera of the portable device as a video input of the video conference terminal with regard to the camera access service;
virtualizing a microphone of the portable device into a voice input of the video conference terminal and accepting the microphone as a voice input of the video conference terminal with regard to the microphone access service;
receiving, by the video conference terminal, shared files uploaded by the portable device and saving the shared files in the video conference terminal or sending the shared files to other corresponding video conference terminals accessed to the video conference terminal according to a request of the portable device with regard to the file sharing service;
receiving, by the video conference terminal, character information sent by the portable device, and transmitting the character information to the other corresponding video conference terminals accessed to the video conference terminal with regard to the real-time character service; and
receiving, by the video conference terminal, videos, voices or other multimedia files sent by the portable device, and transmitting the videos, the voices or the other multimedia files to the other corresponding video conference terminals accessed to the video conference terminal with regard to the real-time multimedia service.

Optionally, the method further includes:
sending, by the video conference terminal, event messages to other remote video conference terminals,
wherein the event messages at least include one of messages below:
notification, short message and state update.

Optionally, the method further includes:
receiving, by the video conference terminal, event messages sent by an MCU (Microprogrammed Control Unit) and/or the other remote video conference terminals, wherein the MCU is a conference management system using a standard protocol; and
transmitting, by the video conference terminal, the event messages sent by the MCU and/or the other remote video conference terminals to the portable device connected to the video conference terminal.

Optionally, a communication manner for transmitting the event messages can be any of communication manners below:
TCP, UDP and HTTP (Hyper Text Transport Protocol).

The portable device capable of accessing to the video conference terminal includes a connection module and an interaction module, wherein
the connection module is configured to establish a connection with the video conference terminal through wireless communication; and
the interaction module is configured to carry out data interaction with the video conference terminal through the connection.

Optionally, the connection module establishes the connection with the video conference terminal by WLAN and or Bluetooth, wherein an adopted data transmission manner is TCP or UDP.

Optionally, the interaction module includes an information acquisition unit and a service request unit, wherein
the information acquisition unit is configured to acquire a terminal list from the video conference terminal, wherein the terminal list contains information of other video conference terminals accessed to the video conference terminal; and
the service request unit is configured to send a service request to the video conference terminal, wherein the service request carries service types and terminal information for requesting the service, and the service request is a VCTProto request protocol.

The video conference terminal includes a connection management module and a data interaction module, wherein
the connection management module is configured to establish a connection with a portable device through the wireless communication; and
the data interaction module is configured to carry out the data interaction with the portable device through the connection.

Optionally, the connection management module establishes the connection with the video conference terminal by the WLAN and or the Bluetooth, and the adopted data transmission manner is TCP or UDP.

Optionally, the data interaction module includes an information issuing unit and a service request receiving unit, wherein
the information issuing unit is configured to acquire a terminal list from the portable device, wherein the terminal list contains information of other video conference terminals accessed to the video conference terminal; and
the service request receiving unit is configured to receive a service request sent by the portable device, wherein the service request carries service types and terminal information for requesting the service, and the service request is a request in a VCTProto request protocol format.

A computer program includes a program instruction which enables a computer to execute any of the above video conference control methods when the program instruction is executed by the computer.

A carrier carrying the computer program is disclosed.

According to the video conference control method and system of the technical solution of the present invention, the portable device establishes the connection with the video conference terminal through the wireless communication and carries out the data interaction with the video conference terminal through the wireless communication, thereby realizing the access of the portable device to a video conference and the control for the video conference and solving the problem that the relevant conference TV control manners cannot meet the application demands.

### BRIEF DESCRIPTION OF DRAWINGS

Fig. 1 is a schematic structural diagram illustrating a video conference control system provided by embodiment 1 of the present invention;
Fig. 2 is a flow chart illustrating a message management service of a server-side in embodiment 2 of the present invention;
Fig. 3 is a flow chart illustrating a conference terminal listing service of the server-side in the embodiment 2 of the present invention;
Fig. 4 is a flow chart illustrating a file sharing service of the server-side in the embodiment 2 of the present invention;
Fig. 5 is a flow chart illustrating an auxiliary video access service of the server-side in the embodiment 2 of the present invention;
Fig. 6 is a flow chart illustrating a camera access service of the server-side in the embodiment 2 of the present invention;
Fig. 7 is a flow chart illustrating a microphone access service of the server-side in the embodiment 2 of the present invention;
Fig. 8 is a flow chart illustrating message management of a client in the embodiment 2 of the present invention;
Fig. 9 is a flow chart illustrating real-time character communication of the client in the embodiment 2 of the present invention;
Fig. 10 is a flow chart illustrating real-time voice communication of the client in the embodiment 2 of the present invention;
Fig. 11 is a flow chart illustrating file sharing of the client in the embodiment 2 of the present invention;
Fig. 12 is a flow chart illustrating a portable auxiliary video of the client in the embodiment 2 of the present invention;
Fig. 13 is a flow chart illustrating camera access of the client in the embodiment 2 of the present invention;
Fig. 14 is a flow chart illustrating microphone access of the client in the embodiment 2 of the present invention;
Fig. 15 is a flow chart illustrating a video conference control method provided by embodiment 3 of the present invention;
Fig. 16 is a specific flow chart illustrating step 1504 in Fig. 15;
Fig. 17 is a specific flow chart illustrating step 1603 in Fig. 16;
Fig. 18 is a schematic structural diagram illustrating a portable device capable of accessing to a video conference terminal, which is provided by embodiment 4 of the present invention; and
Fig. 19 is a schematic structural diagram illustrating the video conference terminal provided by embodiment 4 of the present invention.

### DETAILED DESCRIPTION

Although other control manners, such as Web on-line control, control software installed on a PC and the like, can be selected at present, the manners need to be realized by the PC, while as the PC has poor portability due to the factors of volume, weight and the like, and one PC needs to be equipped for each conference place in a practical application, the cost of the conference place is increased, and the user experience is not high.

For the above problems, especially emerging service demands cannot be met by a control manner of the traditional remote controller in some application scenarios of the conference TVs, and an effective solution has not appeared so far.

In order to solve the above problem, embodiments of the present invention provide a video conference control method and system. Embodiments of the present invention are described below in detail in combination with the drawings. It should be noted that, embodiments in the present application and the features in embodiments can be randomly combined without conflict.

Firstly, embodiment 1 of the present invention is described in combination with the drawing.

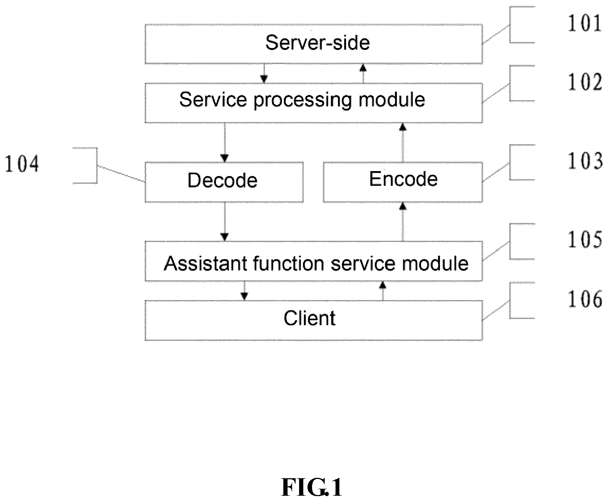

The embodiment of the present invention provides a video conference control system, the structure of the system is shown in Fig. 1, and all modules used in the system are described below:
a server-side module 101 is responsible for underlying communication; a service processing module 102 provides a service support for a client in combination with the server-side module 101; and the client 106 is installed in a portable device, and a user completes a corresponding function by operating the portable device.

Data coding and decoding modules 103 and 104 are configured to carry out coding and decoding processing on all data transmission and packing.

A client assistant function service module 105 is configured to process specific function service logic, realize an assistant function in combination with the client 106 and interact with a server-side and an opposite terminal (other portable devices or terminals accessed to a video conference terminal).

The video conference control system shown in Fig. 1 mainly completes the functions below:
1. communication between a portable device and a video conference terminal (hereinafter referred to as "terminal"), wherein a communication manner is completed by network communication, transmission control is completed by TCP/IP (Internet Protocol), and a communication medium includes but not limited to an Ethernet, a WLAN, a cellular network, a Bluetooth and the like; and a process of establishing connection is consistent with TCP/IP, the difference lies in that an authentication mechanism inside the terminal is used for authentication, and the portable device sends authentication information to the terminal, so as to obtain a terminal control right;
2. a communication protocol between the portable device and the terminal, wherein the assistant function of a conference is realized by the support of the communication protocol, so as to complete signaling interaction and data transmission to support a service function, the communication protocol is mainly a specific VCTProto protocol family of the terminal and also includes basic protocols such as TCP, UDP, FTP (File Transfer Protocol), HTTP, RTP (Real Time Protocol) and the like, and the communication protocol provides the support for data transmission; and
3. data transmission, wherein the types of data transmitted by a conference assistant mainly include text data, file data, voice data, video data and the like, wherein the text data are transmitted by TCP, UDP and HTTP, the file data are mainly transmitted by FTP, the video data and the voice data are transmitted by RTP, an appropriate packing format is selected according to the types of data, and the data are packed and sent.

In the embodiment of the present invention, a corresponding client firstly needs to be installed in the portable device, and an installation method are as follows:
1. an installation file of the client is installed in the video conference terminal, a downloading address is displayed by a two-dimensional code, and the portable device downloads the file by scanning the two-dimensional code and installs the file; and
2. the portable device acquires the installation file from network sources, such as downloading sites, App Store, Google Play store and the like.

Based on a demand analysis on a video conference application scenario, in order to give better user experience to the user, the video conference control system provided by the embodiment of the present invention has the specific functions below:
1. message management:
   the system receives event messages such as a notification, a short message, a state update and the like sent by an MCU and a remote terminal, uniformly puts the event messages in message management, prompts the user to view the event messages and solves the problem of lack of perception of the user for the event messages sent by the MCU and the remote terminal;
2. real-time character communication:
   between a home terminal and the portable device accessed to the remote terminal, the system edits the short message by an input method installed in the portable device, sends the short message to the opposite terminal and displays the short message on the portable device, so as to realize real-time character communication and address the demands for point-to-point text communication between the remote terminal and the conference place and between conference members;
3. real-time voice communication:
   between the home terminal and the portable device accessed to the remote terminal, the system collects voices by a microphone internally installed, sends to the opposite terminal the recorded voices after being compressed and encoded, and decodes and plays the voices after being received by the opposite terminal, so as to realize real-time voice communication and address the demands for point-to-point voice communication between the remote terminal and the conference place and between conference members;
4. file sharing:
   the system provides a sharing manner for sharing files such as pictures, PPT and the like on the portable device to the remote terminal, wherein the sharing manner includes downloading manners of FTP and HTTP files, the remote terminal can browse and open the shared files and can also upload the files to the home terminal, and the function mainly solves the problem that file transmission is difficult during the conference;
5. portable auxiliary video:
   the system collects external video sources such as pictures, camera input, PPT and the like of the portable device, sends video data to the terminal by a processing manner of the video data in the present invention and accesses the video data as auxiliary video sources;
6. camera access:
   the system collects video data of a camera of the portable device, sends the video data to the terminal for display by the processing manner for the video data in the present invention and inputs the video data as a video of the terminal; and
7. microphone access:
   the system collects voice data of the microphone of the portable device, sends the voice data to the terminal for play by the processing manner for the video data in the present invention and inputs the voice data as a voice of the terminal.

Embodiment 2 of the present invention is described below in combination with the drawing.

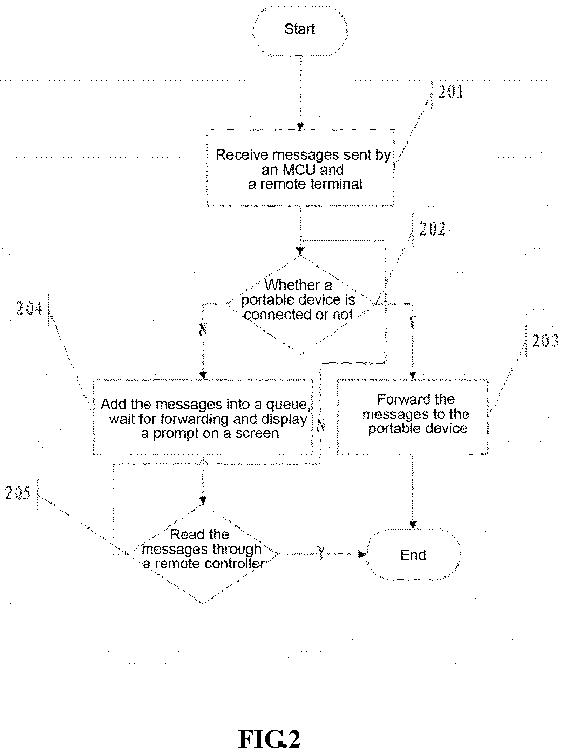

The embodiment of the present invention provides a video conference control method, and a flow of completing a message management service of a server-side by using the method is shown in Fig. 2, wherein the main service is described below:
201, a video conference terminal receives messages sent by an MCU and a remote terminal (i.e., other video conference terminals);
202, whether a portable device is connected or not currently is checked after the messages are received;
203, the messages are forwarded to the portable device if the portable device is connected;
204, the messages are added into a queue for waiting for forwarding, and a prompt is displayed on a screen if the portable device is not connected; and
205, the messages are read through an operation of a remote controller at the moment.

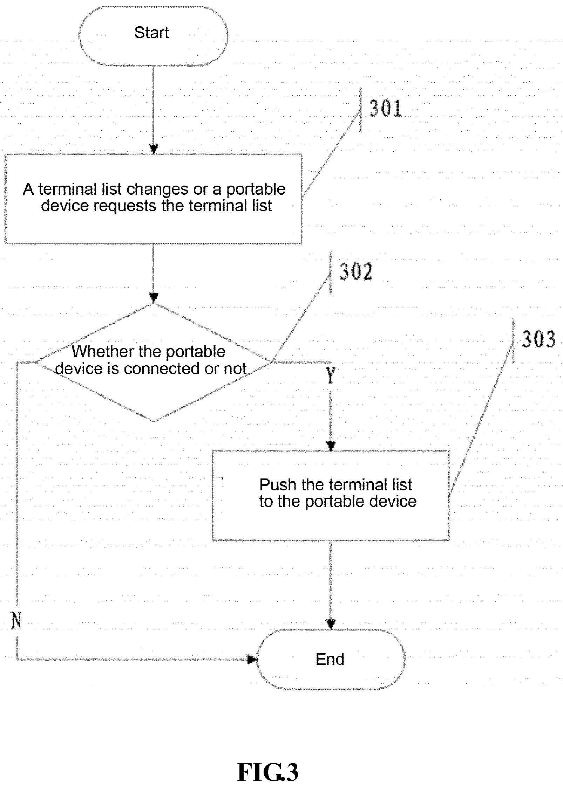

Fig. 3 shows a flow chart illustrating a conference terminal listing service of the server-side provided in the embodiment of the present invention, wherein the main service is described below:
301, a terminal listing change is acquired from the video conference terminal or a portable terminal requests a list of video conference terminals participating in a current conference, and the contents of the terminal list are other video conference terminals accessed to the conference;
302, whether the portable device is connected or not currently is checked; and
303, the terminal list is pushed to the portable device if the portable device is connected.

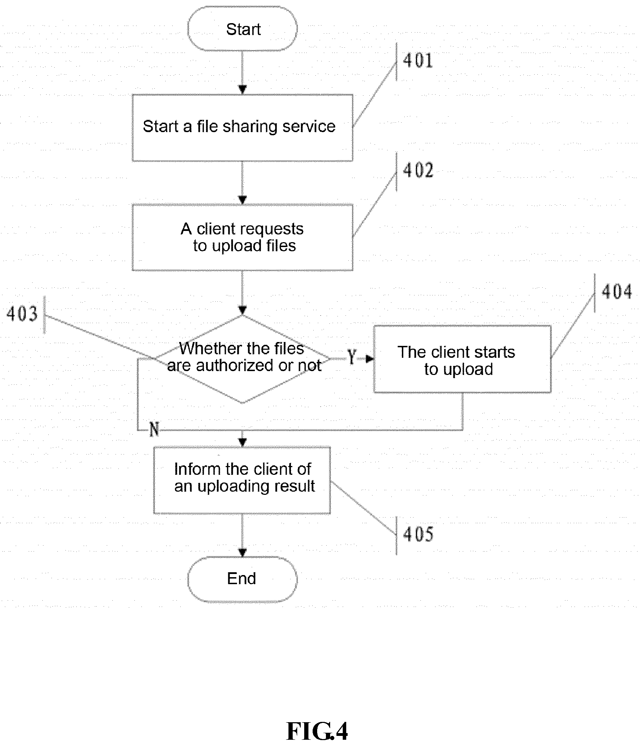

Fig. 4 shows a flow chart illustrating a file sharing service of the server-side provided by the embodiment of the present invention, wherein the main service is described below:
401, the file sharing service is started;
402, a client requests to upload files;
403, whether information of the files uploaded by the client is authorized or not is checked;
404, the client is allowed to start to upload the files if the information of the files is authorized; and
405, an uploading result is informed if the information of the files is unauthorized.

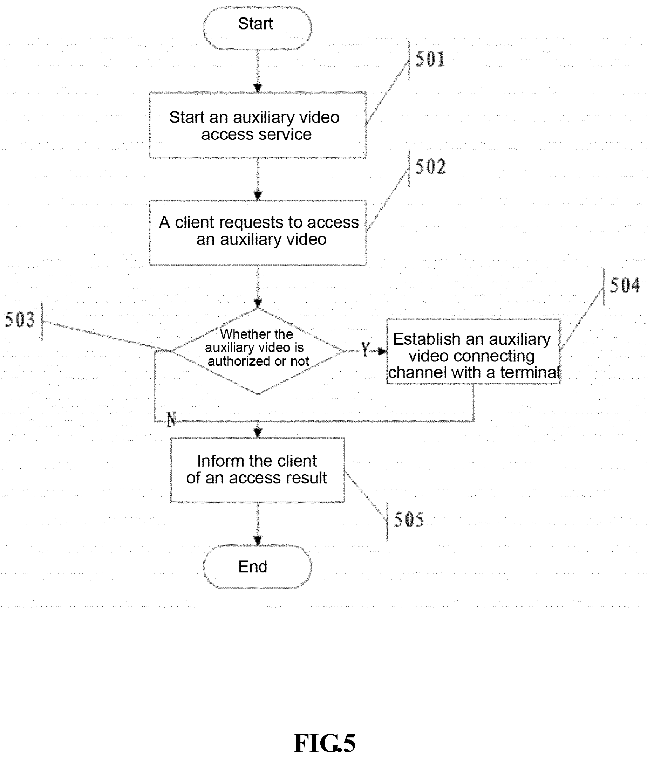

Fig. 5 shows a flow chart illustrating an auxiliary video access service of the server-side provided by the embodiment of the present invention, wherein the main service is described below:
501, the auxiliary video access service is started;
502, the client requests to access an auxiliary video;
503, whether the auxiliary video requested to be accessed is authorized or not is checked;
504, an auxiliary video source channel with the terminal is established if the auxiliary video is authorized; and
505, an auxiliary video access result is informed if the auxiliary video is unauthorized.

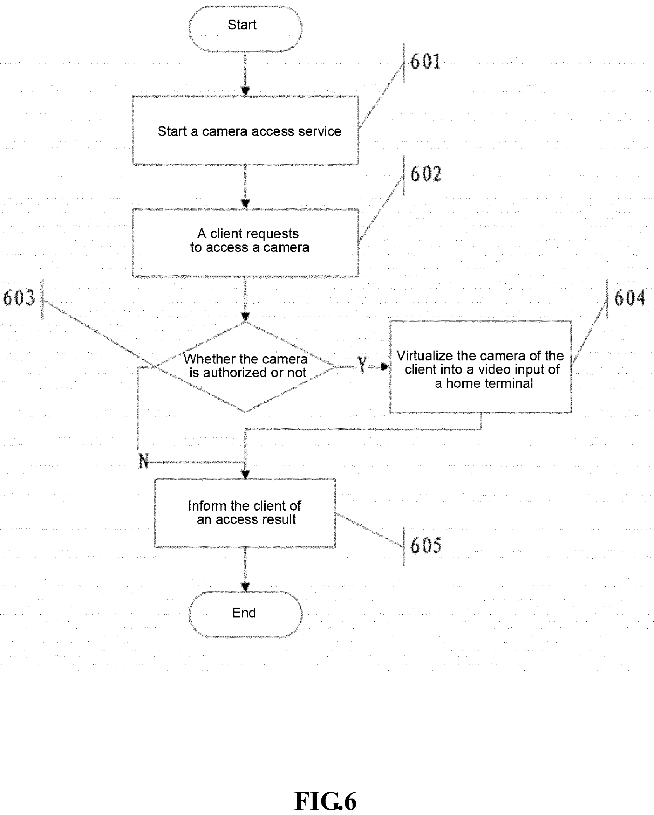

Fig. 6 shows a flow chart illustrating a camera access service of the server-side provided by the embodiment of the present invention, wherein the main service is described below:
601, the camera access service is started;
602, the client requests to access a camera;
603, whether the camera requested to be accessed is authorized or not is checked;
604, the camera of the client is virtualized into a video input of the home terminal if the camera is authorized; and
605, a camera access result is informed if the camera is unauthorized.

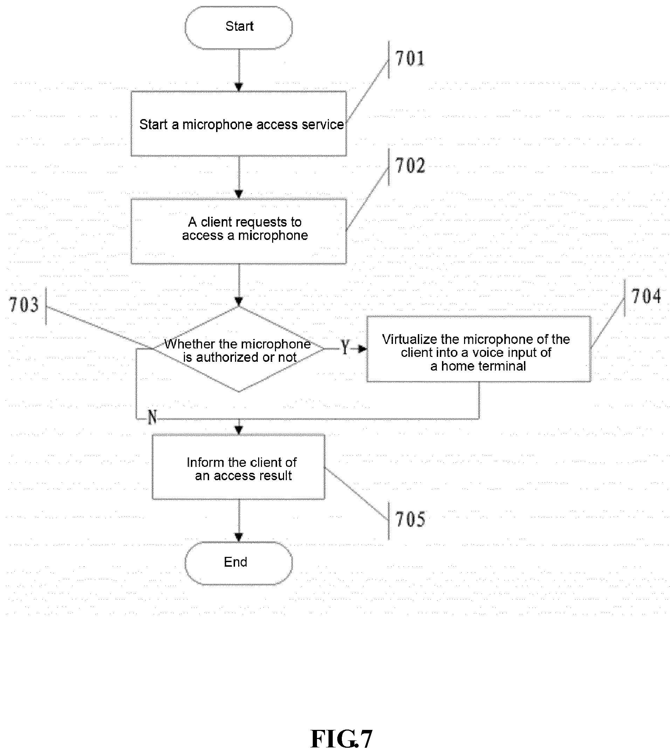

Fig. 7 shows a flow chart illustrating a flow o a microphone access service of the server-side provided by the embodiment of the present invention, wherein the main service is described below:
701, the microphone access service is started;
702, the client requests to access a microphone;
703, whether the microphone requested to be accessed is authorized or not is checked;
704, the microphone of the client is virtualized into a voice input of a home terminal if the microphone is authorized; and
705, a microphone access result is informed if the microphone is unauthorized.

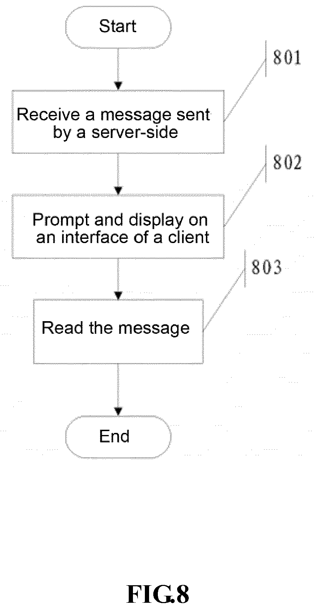

Fig. 8 shows a flow chart illustrating message management of the client provided by the embodiment of the present invention, wherein the main service is described below:
801, the client receives a message sent by the server-side;
802, the message is prompted and displayed on an interface of the client; and
803, a user can read the message.

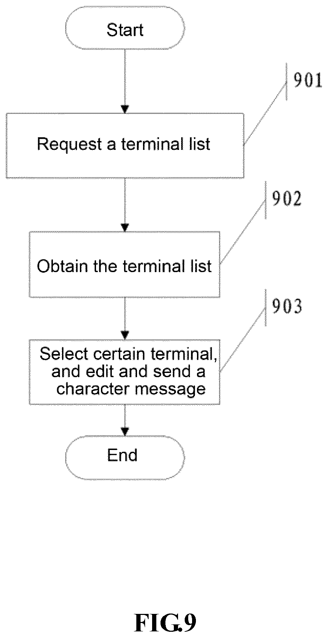

Fig. 9 shows a flow chart illustrating real-time character communication of the client provided by the embodiment of the present invention, wherein the main service is described below:
901, the client sends a request for the terminal list to the server-side;
902, the terminal list is obtained; and
903, some video conference terminal is selected, and a character message is edited and sent.

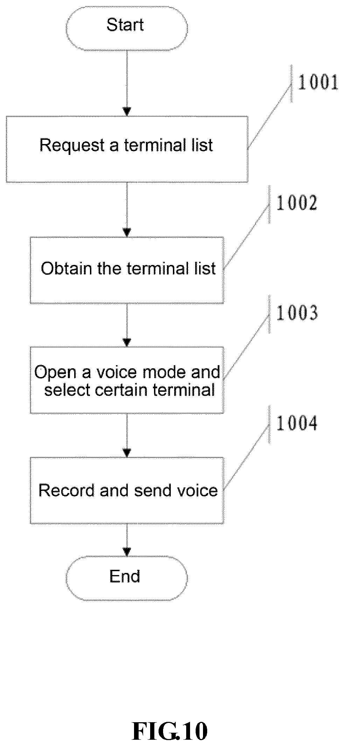

Fig. 10 shows a flow chart illustrating real-time voice communication of the client provided by the embodiment of the present invention, wherein the main service is described below:
1001, the client sends a request for the terminal list to the server-side;
1002, the terminal list is obtained;
1003, a voice mode is opened, and some video conference terminal is selected; and
1004, voice is recorded and sent.

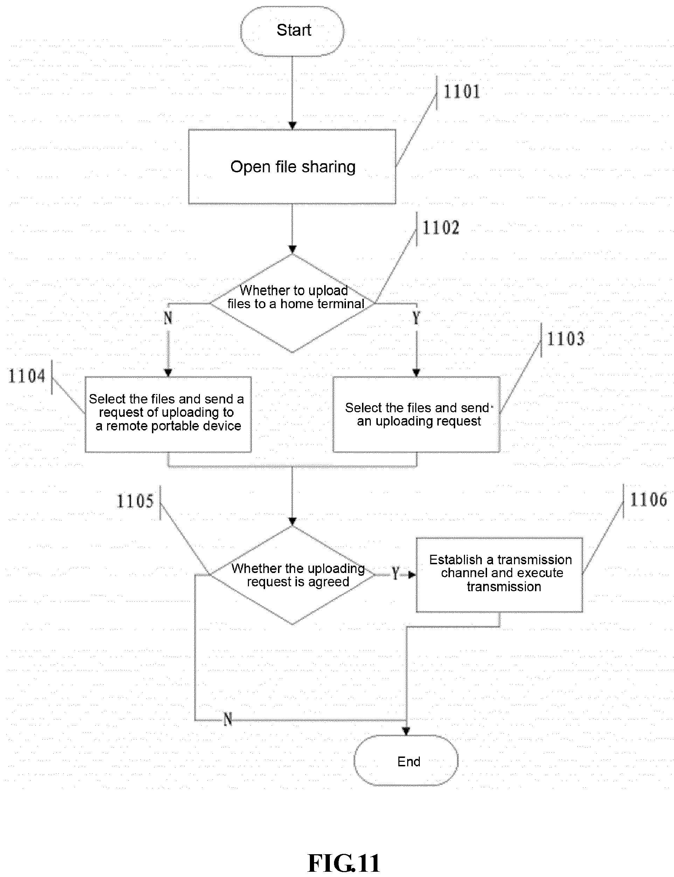

Fig. 11 shows a flow chart illustrating file sharing of the client provided by the embodiment of the present invention, wherein the main service is described below:
1101, the file sharing is opened by the client;
1102, whether the files are uploaded to the home terminal or not is selected;
1103, the files are selected, and an uploading request is sent if the files are uploaded to the home terminal, wherein the request is a specific VCTProto request protocol;
1104, the files are selected, and a request of uploading the files to a remote portable device is sent if the files are not uploaded to the home terminal, wherein the request is a specific VCTProto request protocol;
1105, whether the uploading request is agreed or not is judged; and
1106, a transmission channel is established, and transmission is executed.

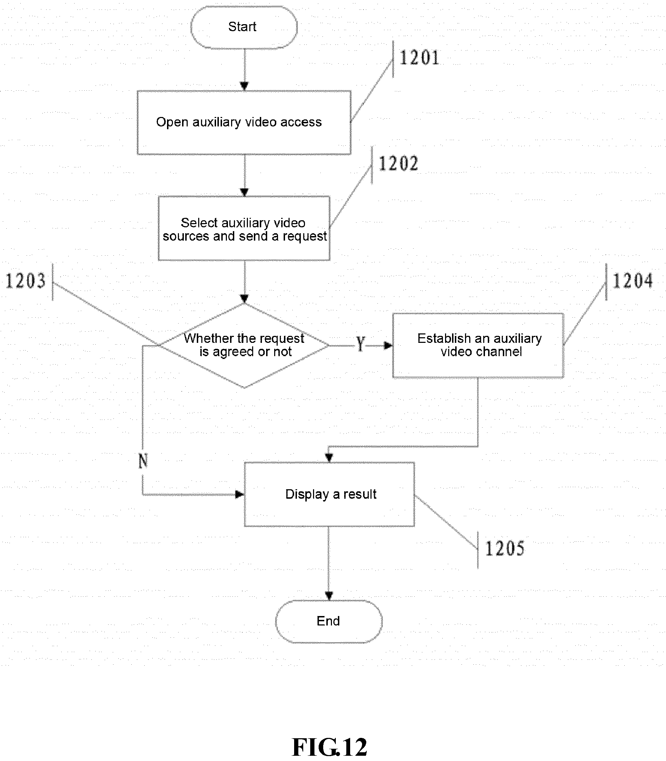

Fig. 12 shows a flow chart illustrating a portable auxiliary video of the client provided by the embodiment of the present invention, wherein the main service is described below:
1201, auxiliary video access is opened by the client;
1202, auxiliary video sources are selected, and a request is sent to the server-side, wherein the request is a specific VCTProto request protocol;
1203, whether the request is agreed or not is judged;
1204, an auxiliary video channel is established; and
1205, a result is informed.

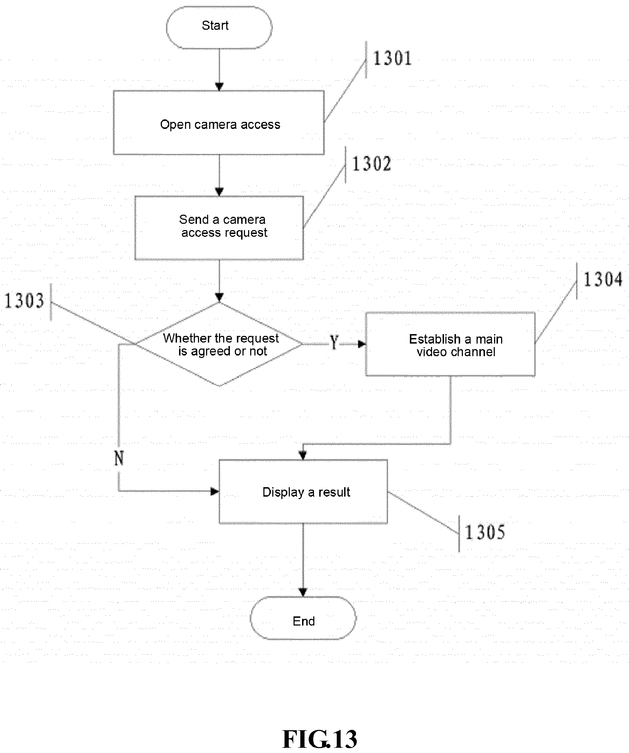

Fig. 13 shows a flow chart illustrating camera access of the client provided by the embodiment of the present invention, wherein the main service is described below:
1301, camera access is opened;
1302, a camera access request is sent, wherein the request is a specific VCTProto request protocol;
1303, whether the request is agreed or not is judged;
1304, a main video channel is established; and
1305, a result is informed.

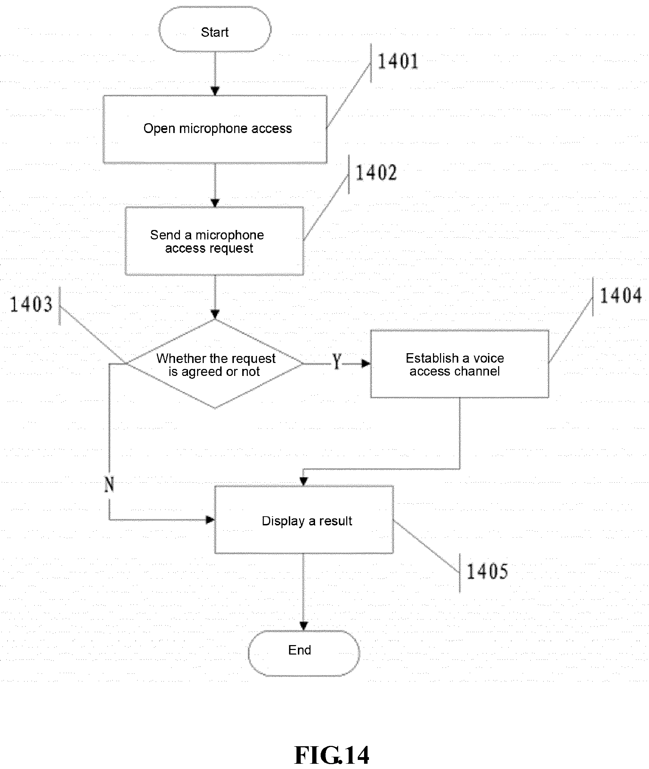

Fig. 14 shows a flow chart illustrating microphone access of the client provided by the embodiment of the present invention, wherein the main service is described below:
1401, microphone access is opened by the client;
1402, a microphone access request is sent, wherein the request is a specific VCTProto request protocol;
1403, whether the request is agreed or not is judged;
1404, a voice access channel is established; and
1405, a result is informed.

Embodiment 3 of the present invention is described below in combination with the drawing.

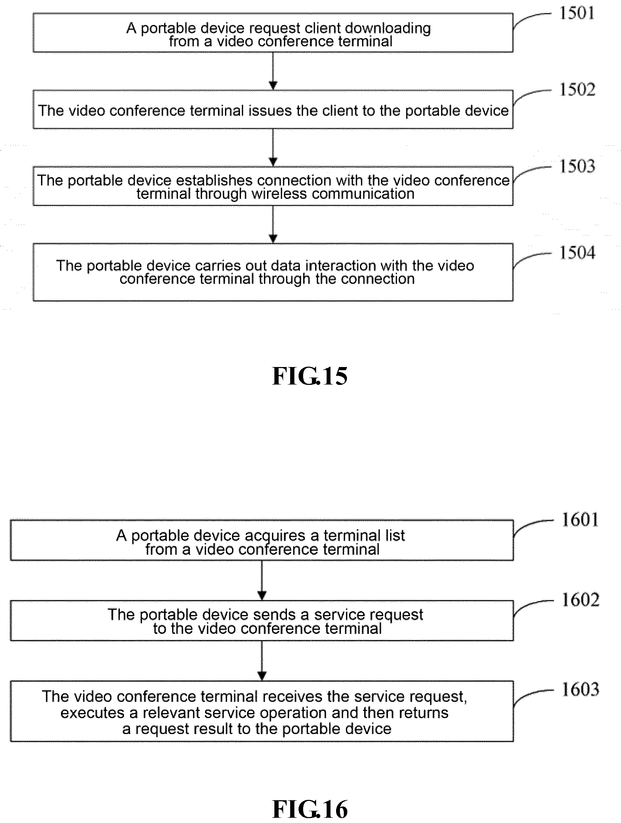

The embodiment of the present invention provides a video conference control method, and a flow of completing control for a video conference by using the method is shown in Fig. 15. The method includes:
step 1501, a portable device request client downloading from a video conference terminal, wherein
a specific downloading manner can refer to the manners listed in embodiment 1 of the present invention, which is not repeated again;
step 1502, the video conference terminal issues the client to the portable device;
step 1503, the portable device establishes connection with the video conference terminal through wireless communication,
wherein the wireless communication includes WLAN and/or a Bluetooth, and a data transmission manner of the wireless communication is TCP or UDP;
step 1504, the portable device carries out data interaction with the video conference terminal through the connection.

The step 1504 is specifically shown in Fig. 16, including:
step 1601, the portable device acquires a terminal list from the video conference terminal, wherein the terminal list contains information of other video conference terminals accessed to the video conference terminal;
step 1602, the portable device sends a service request to the video conference terminal, wherein the service request carries service types and terminal information for requesting the service, and the service request is a VCTProto request protocol; and
step 1603, the video conference terminal receives the service request, executes a relevant service operation and then returns a request result to the portable device.

In the embodiment of the present invention, the service types include any one or more below:
an auxiliary video access service, a camera access service, a microphone access service, a file sharing service, a real-time character service and a real-time multimedia service.

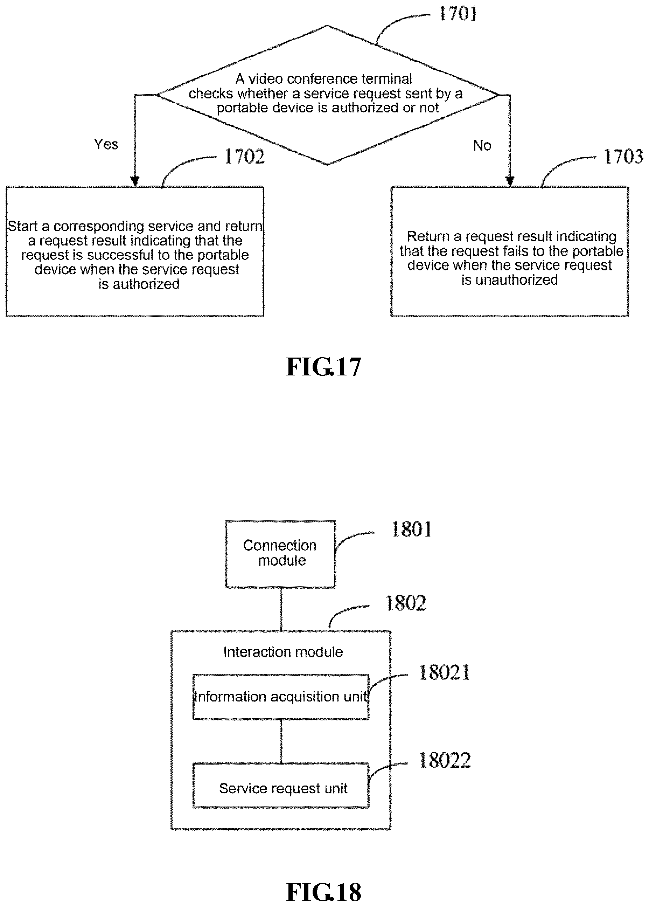

The step 1603 is specifically shown in Fig. 17, including:
step 1701, the video conference terminal checks whether the service request sent by the portable device is authorized or not;
step 1702, a corresponding service is started, and a request result indicating that the request is successful is returned to the portable device when the service request is authorized,
wherein different types of service are specifically processed below:
   1 a picture and camera input of the portable device is accepted as auxiliary video source access of the video conference terminal with regard to the auxiliary video access service;
   2 a camera of the portable device is virtualized into a local video input of the video conference terminal, and the camera of the portable device is accepted as a video input of the video conference terminal with regard to the camera access service;
   3 a microphone of the portable device is virtualized into a voice input of the video conference terminal, and the microphone is accepted as a voice input of the video conference terminal with regard to the microphone access service;
   4 the video conference terminal receives shared files uploaded by the portable device and saves the shared files in the video conference terminal or sends the shared files to other corresponding video conference terminals accessed to the video conference terminal according to the request of the portable device with regard to the file sharing service;
   5 the video conference terminal receives character information sent by the portable device and forwards the character information to the other corresponding video conference terminals accessed to the video conference terminal with regard to the real-time character service; and
   6 the video conference terminal receives videos, voices or other multimedia files sent by the portable device and forwards the videos, the voices or the other multimedia files to the other corresponding video conference terminals accessed to the video conference terminal with regard to the real-time multimedia service.
different types of services are specifically implemented in combination with Figs. 4-14, which are not repeated again; and
step 1703, a request result indicating that the request fails is returned to the portable device when the service request is unauthorized.

Additionally, the video conference terminal can also send event messages to other remote video conference terminals, wherein the event messages at least include one of messages below:
a notification, a short message and a state update.

Correspondingly, the video conference terminal can also receive event messages sent by an MCU and/or the other remote video conference terminals, wherein the MCU is a conference management system using a standard protocol; and
the video conference terminal forwards the event messages to the portable device connected to the video conference terminal.

A communication manner for transmitting the event messages can be any of communication manners below:
TCP, UDP and HTTP.

Embodiment 4 of the present invention is described below in combination with the drawing.

The embodiment of the present invention provides a portable device capable of accessing to a video conference terminal, and the structure of the portable device is shown in Fig. 18, including:
a connection module 1801, configured to establish connection with the video conference terminal through wireless communication; and
an interaction module 1802, configured to carry out data interaction with the video conference terminal through the connection.
Preferably, the connection module 1801 establishes the connection with the video conference terminal by a WLAN and/or a Bluetooth, and an adopted data transmission manner is TCP or UDP.

Preferably, the interaction module 1802 includes:
an information acquisition unit 18021, configured to acquire a terminal list from the video conference terminal, wherein the terminal list contains information of other video conference terminals accessed to the video conference terminal; and
a service request unit 18022, configured to send a service request to the video conference terminal, wherein the service request carries service types and terminal information for requesting the service, and the service request is a VCTProto request protocol.

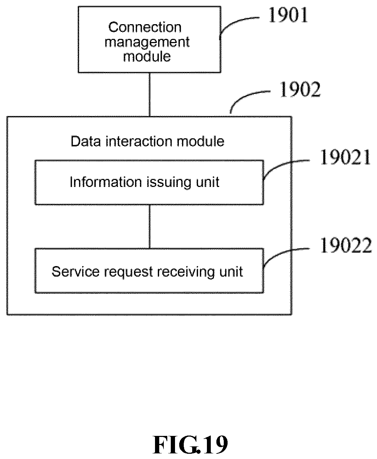

The embodiment of the present invention also provides the video conference terminal, and the structure of the video conference terminal is shown in Fig. 19, including:
a connection management module 1901, configured to establish the connection with the portable device through the wireless communication; and
a data interaction module 1902, configured to carry out the data interaction with the portable device through the connection.

Preferably, the connection management module establishes the connection with the video conference terminal by the WLAN and/or the Bluetooth, and the adopted data transmission manner is TCP or UDP.

Preferably, the data interaction module 1902 includes:
an information issuing unit 19021, configured to acquire the terminal list from the portable device, wherein the terminal list contains the information of the other video conference terminals accessed to the video conference terminal; and
a service request receiving unit 19022, configured to receive the service request sent by the portable device, wherein the service request carries the service types and the terminal information for requesting the service, and the service request is a request in a specific VCTProto request protocol format.

According to the video conference control method and system provided by embodiments of the present invention, the portable device establishes the connection with the video conference terminal through the wireless communication and carries out the data interaction with the video conference terminal through the wireless communication, thereby realizing the access of the portable device to a video conference and the control for the video conference and solving the problem that relevant conference TV control manners cannot meet application demands.

Embodiments of the present invention also provide a computer program, including a program instruction which enables a computer to execute any of the above video conference control methods when the program instruction is executed by the computer.

Embodiments of the present invention also provide a carrier with the computer program.

Those ordinary skilled in the art can understand that all or some of steps of above embodiments can be realized by using a flow of the computer program, the computer program can be stored in a computer readable storage medium and is executed on a corresponding hardware platform (such as a system, a device, an apparatus, a component and the like), and the computer program includes one or a combination of the steps of embodiments of the method when executed.

Optionally, all or some of steps of above embodiments can also be realized by using an integrated circuit, the steps can be respectively made into individual integrated circuit modules, or a plurality of modules or steps thereof are made into a single integrated circuit module. In this way, the present invention is not limited to any specific combination of hardware and software.

All apparatus/function modules/function units in above embodiments can be realized by a universal calculating apparatus, can be concentrated on a single calculating device and can also be distributed on a network formed by a plurality of calculating apparatuses.

All the apparatus/functional modules/functional units in above embodiments can be stored in a computer readable storage medium when being realized in a form of a software function module and sold or used as independent products. The above computer readable storage medium may be an ROM (read-only memory), a disk or an optical disk and the like.

Any change or replacement easily thought by those skilled in the art acquainted with the technical field within the technical scope disclosed by the present invention shall be included in the protection scope of the present invention. Therefore, the protection scope of the present invention is subject to the protection scope described in claims.

### Industrial Application

According to the video conference control method and system of the technical solution of the present invention, the portable device establishes the connection with the video conference terminal through the wireless communication and carries out the data interaction with the video conference terminal through the wireless communication, thereby realizing the access of the portable device to the video conference and the control for the video conference and solving the problem that the relevant conference TV control manners cannot meet the application demands. Therefore, the present invention has a strong industrial application.

## Claims

1. A video conference control method, comprising:
establishing connection, by a portable device, with a video conference terminal through wireless communication; and
carrying out data interaction, by the portable device, with the video conference terminal through the connection.

2. The video conference control method according to claim 1, before establishing the connection with the video conference terminal by the portable device through the wireless communication, further comprising:
Requesting, by the portable device, client downloading from the video conference terminal; and
issuing, by the video conference terminal, the client to the portable device.

3. The video conference control method according to claim 1 or 2, wherein the step of carrying out the data interaction with the video conference terminal by the portable device through the wireless communication comprises:
acquiring, by the portable device, a terminal list from the video conference terminal, wherein the terminal list contains information of other video conference terminals accessed to the video conference terminal;
sending, by the portable device, a service request to the video conference terminal, wherein the service request carries service types and terminal information for requesting the service, and the service request is a VCTProto request protocol; and
receiving, by the video conference terminal, the service request, and executing a service operation corresponding to the service request and then returning a request result to the portable device.

4. The video conference control method according to claim 3, wherein the service types comprise any one or more of information below:
auxiliary video access service, camera access service, microphone access service, file sharing service, real-time character service, and real-time multimedia service.

5. The video conference control method according to claim 3 or 4, wherein the step of receiving, by the video conference terminal, the service request and returning the request result to the portable device comprises:
checking, by the video conference terminal, whether the service request sent by the portable device is authorized or not;
starting a service corresponding to the service request and returning a request result indicating that the request is successful to the portable device when the service request is authorized; and
returning a request result indicating that the request fails to the portable device when the service request is unauthorized.

6. The video conference control method according to claim 5, wherein the step of starting the service corresponding to the service request when the service request is authorized comprises:
accepting a picture and camera input of the portable device as auxiliary video source access of the video conference terminal with regard to the auxiliary video access service;
virtualizing a camera of the portable device into a local video input of the video conference terminal and accepting the camera of the portable device as a video input of the video conference terminal with regard to the camera access service;
virtualizing a microphone of the portable device into a voice input of the video conference terminal and accepting the microphone as a voice input of the video conference terminal with regard to the microphone access service;
receiving, by the video conference terminal, shared files uploaded by the portable device and saving the shared files in the video conference terminal or sending the shared files to other corresponding video conference terminals accessed to the video conference terminal according to a request of the portable device with regard to the file sharing service;
receiving, by the video conference terminal, character information sent by the portable device, and forwarding the character information to the other corresponding video conference terminals accessed to the video conference terminal with regard to the real-time character service; and
receiving, by the video conference terminal, videos, voices or other multimedia files sent by the portable device, and forwarding the videos, the voices or the other multimedia files to the other corresponding video conference terminals accessed to the video conference terminal with regard to the real-time multimedia service.

7. The video conference control method according to claim 6, further comprising:
sending, by the video conference terminal, event messages to other remote video conference terminals,
wherein the event messages at least comprise one of messages below:
notification, short message and state update.

8. The video conference control method according to claim 7, further comprising:
receiving, by the video conference terminal, event messages sent by an MCU and/or the other remote video conference terminals, wherein the MCU is a conference management system using a standard protocol; and
forwarding, by the video conference terminal, the event messages sent by the MCU and/or the other remote video conference terminals to the portable device connected to the video conference terminal.

9. A portable device capable of accessing to the video conference terminal, comprising a connection module and an interaction module, wherein
the connection module is configured to establish a connection with the video conference terminal through wireless communication; and
the interaction module is configured to carry out data interaction with the video conference terminal through the connection.

10. The portable device according to claim 9, wherein
the connection module establishes the connection with the video conference terminal by WLAN and/or Bluetooth, wherein an adopted data transmission manner is TCP or UDP.

11. The portable device according to claim 9 or 10, wherein the interaction module comprises an information acquisition unit and a service request unit, wherein
the information acquisition unit is configured to acquire a terminal list from the video conference terminal, wherein the terminal list contains information of other video conference terminals accessed to the video conference terminal; and
the service request unit is configured to send a service request to the video conference terminal, wherein the service request carries service types and terminal information for requesting the service, and the service request is a VCTProto request protocol.

12. A video conference terminal, comprising a connection management module and a data interaction module, wherein
the connection management module is configured to establish a connection with a portable device through wireless communication; and
the data interaction module is configured to carry out data interaction with the portable device through the connection.

13. The video conference terminal according to claim 12, wherein the data interaction module comprises an information issuing unit and a service request receiving unit, wherein
the information issuing unit is configured to acquire a terminal list from the portable device, wherein the terminal list contains information of other video conference terminals accessed to the video conference terminal; and
the service request receiving unit is configured to receive a service request sent by the portable device, wherein the service request carries service types and terminal information for requesting the service, and the service request is a request in a VCTProto request protocol format.

14. A computer program, comprising a program instruction which enables a computer to execute any of the video conference control methods in claims 1-8 when the program instruction is executed by the computer.

15. A carrier carrying the computer program in claim 14.
